(19) **Europäisches Patentamt**
**European Patent Office**
**Office européen des brevets**

(11) **EP 1 947 441 B1**

(12) **EUROPEAN PATENT SPECIFICATION**

(45) Date of publication and mention
of the grant of the patent:
**10.07.2013 Bulletin 2013/28**

(51) Int Cl.:
*G01N 15/14* (2006.01)          *G01N 33/49* (2006.01)

(21) Application number: **07121740.0**

(22) Date of filing: **28.11.2007**

(54) **Apparatus for determining positions of objects contained in a sample**

Vorrichtung zur Bestimmung der Positionen von in einer Probe enthaltenen Objekten

Appareil pour déterminer les positions d'objets contenus dans un échantillon

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.01.2007 SE 0700086**
**14.03.2007 US 906825 P**

(43) Date of publication of application:
**23.07.2008 Bulletin 2008/30**

(73) Proprietor: **HemoCue AB**
**262 23 Ängelholm (SE)**

(72) Inventors:
• **Lindberg, Stellan**
**260 91, Förslöv (SE)**
• **Olesen, Tom**
**3330, Görlöse (DK)**

(74) Representative: **Andersson, Mikael Per Robert**
**Awapatent AB**
**Box 1066**
**251 10 Helsingborg (SE)**

(56) References cited:
WO-A1-97/02482          WO-A1-2005/062019
WO-A2-03/067904          US-A- 5 828 776
US-A1- 2006 050 948

• BRINKMANN M ET AL: "New technologies for automated cell counting based on optical image analysis 'The Cellscreen'", CYTOTECHNOLOGY, KLUWER ACADEMIC PUBLISHERS, DORDRECHT, NL, vol. 38, no. 1-3, 1 January 2002 (2002-01-01), pages 119-127, XP002328794, ISSN: 0920-9069, DOI: 10.1023/A:1021118501866

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention generally relates to an apparatus for determining positions of objects contained in a sample, as well as a method and a computer program.

Background of the invention

Today, there are a number of different approaches for analyzing blood samples. One of these approaches is automatic image analysis.

The general concept of automatic image analysis is to capture image data of the sample and thereafter analyze the captured image data using different algorithms. Generally, in order to perform a reliable analysis, the image data captured by the system should be high quality image data.

There are a number of ways to ensure the quality of the image data. A first way is to provide a high quality image sensor, another way is to control the environment of the image analysis system. For example, by controlling the light environment, the amount of stray light may be reduced, and hence the image quality is improved. Rendering high quality image data is expensive and time- and capacity-consuming.

In prior art systems, in order to find the positions of objects in a three-dimensional sample, several images have to be taken focusing on different layers in the sample.

An example of a system based upon image analysis is US 3 824 393, which describes a system for differentiating and counting particles. The presence in the field of view of a particle of the type to be differentiated and counted is detected and an image of the field is scanned by a television camera. Picture elements corresponding to a particle to be analyzed are circumscribed by box-finding algorithms and data corresponding to picture elements enclosed by the box are analyzed for parameters used in identifying the particle. Particles are identified by a distance measure or criterion of closeness to selected prototype particle points. Focus is automatically preserved during microscope imaging of a specimen passed beneath the microscope objective to ensure reliable data for processing.

US 20040136581 A1 discloses a method and apparatus for automated cell analysis of biological specimens. The apparatus is used for detection and counting of candidate objects of interest such as normal and abnormal cells, for example tumor cells. Images acquired at low magnification are processed and then analyzed to determine candidate cell objects of interest. The location coordinates of objects of interest are stored and additional images of the candidate cell objects are acquired at high magnification. Best focal position estimations are performed before acquiring both the images of high and low magnification, respectively. It is necessary that each slide containing the biologic specimen to be analyzed remains in focus during scanning. One described method of focal position estimation is the initial focusing operation on each slide prior to scanning, another is the determination of the best-fit focus plane. Furthermore, a further refocusing operation is conducted since the use of a higher magnification (40x or 60x) requires more precise focus than the best-fit plane provides. A problem with the method and apparatus described is that it is very time- and capacity-consuming to acquire all these images and, after that, to examine all these images. Furthermore, the focusing and refocusing of the apparatus is also very time- and capacity-consuming.

US 2006/0050948 A1 discloses a method and apparatus for cell counting and classification, storing positional information of the cells. From several acquired images at different focal planes, each pixel considered to represent the sharpest focus is extracted and contributes to a composed focus synthesis image.

Summary

In view of the above, an objective of the invention is to solve or at least reduce the problems discussed above. In particular, an objective is to provide an apparatus for determining positions of objects in a sample, wherein the objects in the sample are positioned at different distances from an image sensor of the apparatus.

The above object is achieved according to a first aspect of the invention by means of an apparatus according to claim 1.

Hence, the invention enables three dimensional analysis of the sample in contrast to prior art solutions where typically only two dimensional analysis is performed.

An advantage of this is that the objects to be detected comprised within the sample are to a higher extent depicted equally. This, in turn, implies that a better image data analysis may be performed, which means that a more correct analysis may be made.

Further, the optical system may be configured such that a detail resolution is less than a typical size of said objects in said sample.

An advantage of this is that although the object detail resolution is deteriorated due to the increased depth of field, the objects to be detected may still be possible to detect.

The image data processor of the apparatus may further comprise a first image data pre-processor configured to identify overexposed regions of said image data and to generate pre-processed image data by excluding said overexposed regions from said image data.

An advantage of this is that if the illumination conditions are such that parts of the image data are overexposed, such regions may be identified and compensated for.

Further, the image data processor may comprise a second image data pre-processor configured to identify underexposed regions of said image data and to generate pre-processed image data by excluding said underexposed regions from said image data.

An advantage of this is that if the illumination conditions are such that parts of the image data are underexposed, such regions may be identified and compensated for.

The image data processor of the apparatus may further comprise a high local contrast pixel determinator configured to receive image data, to generate low pass filtered image data based upon said received image data, to determine difference image data by subtracting said generated low pass filtered image data from said received image data and to determine high intensity pixels in said difference image data.

The image data processor of the apparatus may further be configured to generate low pass filtered image data using wavelets.

The light emitting device of the apparatus may be a light emitting diode (LED).

The LED is, as such, a point source. However, in combination with a diffuser and a cavity of a sample acquiring device, a fraction of the light may be transformed into light which is close to parallel. Having close to parallel light is advantageous since it implies that the boundaries of the objects in the sample are represented properly on the image sensor, which is not the case if a non-parallel, i.e. not parallel and not close to parallel, light is used. Another positive implication of using light which is close to parallel is that the transitional effects, which for instance may arise in the transition from air to the sample acquiring device, are reduced by using light that is close to parallel instead of non-parallel light.

The wavelength of the light generated by the light emitting device of the apparatus is between 625 nm and 740 nm.

If a blood sample is to be analyzed it is advantageous to use visible red light, that is light with a wavelength of 625 to 740 nm, which is the transmission window, for this purpose. More particularly, it is advantageous to use light with a wavelength of 660 nm.

In said apparatus, a ratio between a distance between said image sensor and said lens arrangement and an aperture diameter of said optical system is 20-30.

More particularly, the ratio may be 25.

The lens arrangement of the apparatus has a magnification of 2-4 times.

More particularly, the magnification may be 3 times,

The sample is a blood sample.

The above object is achieved according to a second aspect of the invention by means of a method for determining positions of objects contained within a sample according to claim 8.

The advantages of the first aspect are also applicable for the second aspect.

The method according to the second aspect may further comprise:

identifying overexposed regions of said image data using a first image data pre-processor, and generating pre-processed image data by excluding said overexposed regions from said image data.

The method according to the second aspect may further comprise:

identifying underexposed regions of said image data using a first image data pre-processor, and generating pre-processed image data by excluding said underexposed regions from said image data.

The method according to the second aspect may further comprise:

generating low pass filtered image data based upon said image data using a high local contrast pixel determinator, determining difference image data by subtracting said generated low pass filtered image data from said image data using said high local contrast determinator, and determining high intensity pixels in said difference image data using said high local contrast determinator.

The generation of low pass filtered image data may be performed by utilizing wavelets.

The above object is provided according to a third aspect of the invention by use of an apparatus according to the first aspect to count a number of blood cells comprised in a blood sample.

The above object is achieved according to a fourth aspect of the invention by means of a computer program comprising software instructions arranged to perform the method according to the second aspect when downloaded and run in an apparatus.

The above object is achieved according to a fifth aspect of the invention by means of a computer program product stored on a computer usable medium, comprising computer readable program means for causing a computer to perform the method according to the second aspect of the invention.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig 1 is a diagrammatic illustration of an apparatus for determining positions of objects in a sample.
Fig 2 illustrates the apparatus of fig 1 in further detail.
Fig 3 is a flow chart of a method according to the present invention.

Detailed description of preferred embodiments

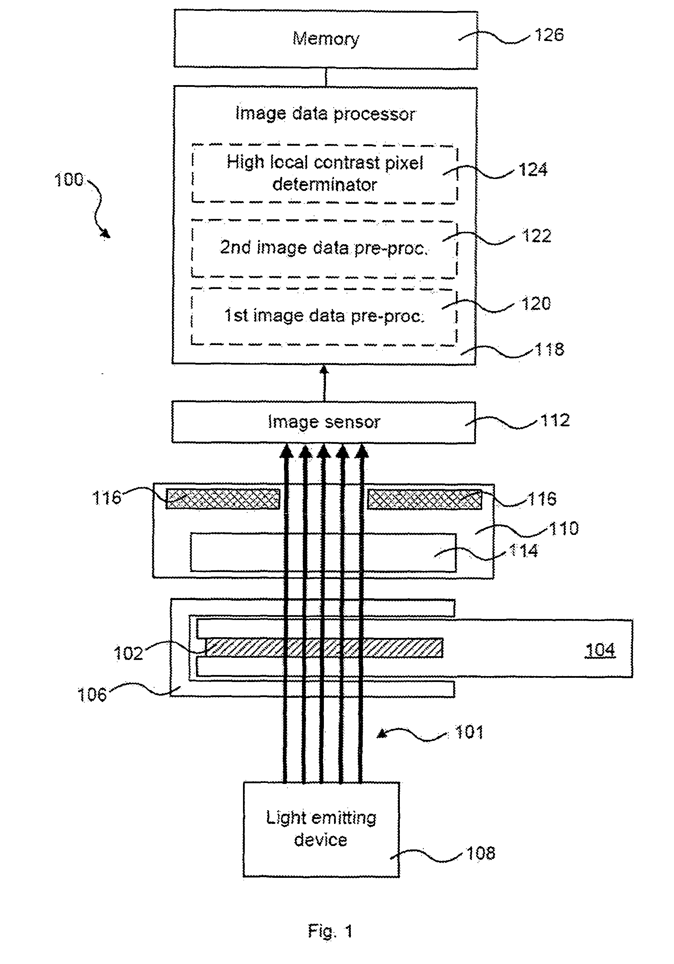

Fig 1 generally illustrates an apparatus 100 for determining positions of objects in a sample 102. The sample 102 may be a blood sample retained in a sample acquiring device 104, and the objects in the sample 102 may be white blood cells.

The sample 102 is retained in the sample acquiring device 104, which, in turn, can be placed in a sample holder 106.

After the sample 102 has been placed in the sample holder 106, light 101 can be transmitted from a light emitting device 108 through the sample 102 and an optical system 110 onto an image sensor 112.

In embodiments adapted to determine positions of objects in a blood sample, the emitted light 101 may have a wavelength of 660 nm.

Further, the light emitting device 108 may be a light emitting diode (LED). An advantage of having a LED as the light emitting device 108 is that the light of the LED may, in combination with a diffuser and the cavity of the sample acquiring device, generate light that is close to parallel. This implies that the boundaries of the objects in the sample 102 are represented properly on the image sensor, which is not the case if a non-parallel, i.e. not parallel and not close to parallel, light is used. Another positive implication of using light which is close to parallel is that the transitional effects which, for instance, may arise between the transition from air to the sample acquiring device 104 are reduced by using light that is close to parallel instead of non-parallel light

The control of the light emitting device 108 may be a dynamic control, i.e. the light emitting device 108 may be adapted for each individual image. An advantage of this is that high quality image data may be achieved although the stain of the sample is not homogeneously spread.

The optical system 110 comprises a lens arrangement 114 and an aperture 116. The lens arrangement 114 focuses the light 101 onto the image sensor 112. Further, the lens arrangement 114 may magnify the object size. In one embodiment the magnification is three times. The aperture 116 may be an iris.

Moreover, the design of the optical system is such that the depth of field is greater than the thickness of the sample 102, which means that the objects in the sample, although these objects are placed at different distances from the image sensor, are to a higher extent depicted equally. Though, due to this design of the optical system 110, diffraction artifacts can arise, which implies that the object detail resolution deteriorates. However, the apparatus 100, including the optical system as well as the sample, is designed in such a way that the object detail resolution is less than the typical size of an object to be detected, which means that the objects to be detected are not resolved due to the deteriorated object detail resolution, but smaller particles, irrelevant to the present application, may be invisible due to the deteriorated object detail resolution, Therefore, briefly speaking, a low pass filtering is performed at the same time as the image data is generated.

The image sensor 112, which may be a CMOS sensor, is configured to transform the incident light to image data. The image data is input to an image data processor 118, which, in turn, determines the positions of the objects based upon the received image data.

In order to improve the functionality of the image data processor 118, a first image data pre-processor 120 may be utilized. The first image data pre-processor 120 can be configured to detect overexposed regions of said image data, and to generate pre-processed image data by excluding these detected regions from said image data. The detection of overexposed regions may be performed by determining connected regions of pixels having pixel values above a predetermined upper threshold value, such as 254 if said image data is 8-bit image data.

Further, a second image data pre-processor 122 may be utilized. The second image data pre-processor 122 can be configured to detect underexposed regions of the image data, and to generate pre-processed image data by excluding these detected regions from said image data. The detection of underexposed regions may be performed by determining connected regions of pixels having pixel values below a predetermined lower threshold value, such as 2 if said image data is 8-bit image data.

The first and second image data pre-processors may process the image data sequentially as well as in parallel. The two image data pre-processors may also be combined into one general image data pre-processor. Further, the first and the second image data pre-processor may be realized as software implementations.

The image data generated by the image sensor 112 or, if the first and second image data pre-processor are available, pre-processed image data, is thereafter transferred to a high local contrast pixel determinator 124.

Based upon the image data receded by the high local contrast pixel determinator 124 low pass filtered image data is determined. Briefly speaking, the low pass filtered image data may be considered as image data only comprising the fundamentals of the image data. In order to calculate low pass filtered image data, the high local contrast pixel determinator 124 can utilize wavelets.

Next, difference image data is generated by subtracting the low pass filtered image data from the image data. In other words, by generating difference image data, the fundamentals of the image data are removed, which, in turn, means that regions of the image data having high contrast are easily recognized.

Then, high intensity pixels of said difference image data are identified as the objects to be detected, which in turn gives the locations of the objects to be determined.

Further, a memory 126 may be associated to the apparatus 100. The memory 126 may be a memory structure comprising for example a hard drive, a cache and/or a RAM. Software instructions, threshold values, images and/or number of objects may be stored in the memory 126.

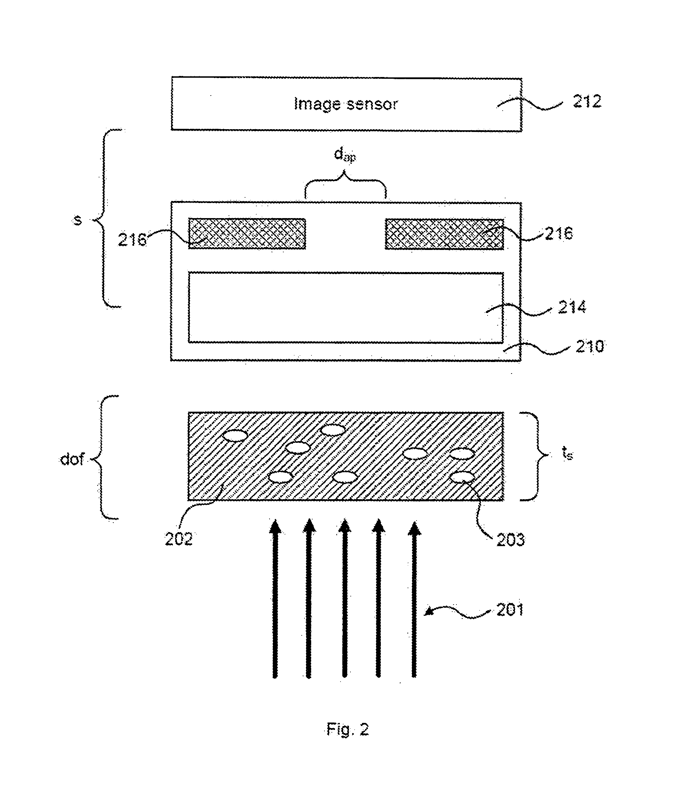

Fig 2 illustrates the apparatus of fig 1 in further detail.

Light 201 incides through a sample 202, containing objects 203 to be detected, and an optical system 210 onto an image sensor 212, as described above. Further, as described above, the optical system 210 can comprise a lens arrangement 214 and an aperture 216.

In order to depict the objects 203 within the sample 202 positioned at different distances from the image sensor equally, the optical system 210 and the sample 202 are configured such that the depth of field, herein denoted as *dof,* is greater than the thickness of the sample, herein denoted as $t_s$.

In a specific embodiment for detecting white blood cells in a blood sample, an external aperture diameter $d_{ap}$ of the optical system is set to 0.9 mm, the light of the light emitting device is set to a wavelength λ of 660 nm and a distance s between the optical system 210 and the image sensor 212 is set to approximately 23 mm.

This gives a diffraction limited resolution d$_{lim}$ of 20.6 μm according to calculations using the expression:

$$d_{\text{lim}} \approx 1.22 \cdot \lambda \cdot \frac{s}{d_{ap}}$$

In this specific embodiment, the magnification of the optical system is 3 times, which implies that the object detail resolution in the sample is approximately 7 μm (20.6 μm /3). This means that objects with a separation of less than 7 μm may not be resolved as two separate objects.

Because of the diffraction, particles in the sample 202 smaller than 7 μm may be hard to recognize using image data analysis due to the deteriorated detail resolution. However, since blood cells are of the size 5-22 μm most of them will be recognized even though diffraction arises.

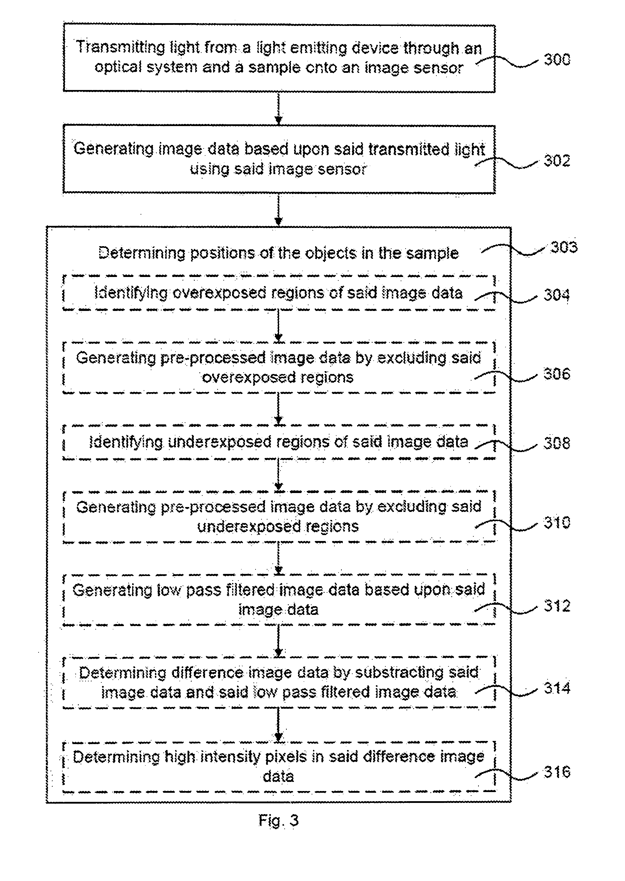

Fig 3 generally illustrates a method according to the present invention.

In a first step 300, light from a light emitting device is transmitted through an optical system and a sample onto an image sensor.

In a second step 302, image data is generated based upon said transmitted light using said image sensor.

In a third step 303, positions of objects in the image data are determined using an image processor.

Optionally, in a sub-step 304, overexposed regions of said image data are identified, and, in a sub-step 306, pre-processed image data is generated by excluding said identified overexposed regions of said image data.

Optionally, in a sub-step 308, underexposed regions of said image data are identified, and, in a sub-step 310, pre-processed image data is generated by excluding said identified underexposed regions of said image data.

Optionally, the sub-step 304 and the sub-step 308 may be performed at the same time, and the fourth step and the sub-step 310 may be performed at the same time.

Optionally, in a sub-step 312, low pass filtered image data may be generated based upon said image data.

Optionally, in a sub-step 314, difference image data is determined by subtracting the low pass filtered image data from the image data.

Optionally, in a sub-step 316, high intensity pixels in said image data may be determined,

Although the sample 202 is described as a blood sample, any other type of sample is also possible.

Optionally, in order to facilitate the analysis, the blood sample may be stained, i.e. a chemical substance may be added to the blood sample in order to emphasize the objects to be detected.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. An apparatus for determining positions of objects contained within a sample, said apparatus comprising

   an image sensor (112, 212) configured to transform incident light to image data,

an optical system (110, 210) comprising a lens arrangement (114, 214) and an aperture (116, 216), said aperture (116, 216) positioned between said image sensor (112, 212) and said lens arrangement (114, 214),

a light emitting device (108) configured to generate light towards said image sensor through said sample and said optical system and

an image data processor (118) configured to receive image data from said image sensor (112, 212) and to determine positions for objects (203) in said image data,

wherein said sample (102, 202) is a blood sample, wherein said optical system (110, 210) is configured such that a depth of field of said optical system (110, 210) is larger than or equal to a thickness of said sample (102, 202), **characterised in that**

a ratio between a distance between said image sensor (112, 212) and said lens arrangement (114, 214) and an aperture (116, 216) diameter of said optical system (110, 210) is 20-30, and

a magnification of said lens arrangement (114, 214) is approximately 2-4 times and that the wavelength of said light emitting device (108) is between 625 nm and 740 nm.

2. The apparatus according to claim 1, wherein said optical system (110,210) is configured with a detail resolution that is less than a typical size of said objects (203) in said sample (102).

3. The apparatus according to any one of the preceding claims, wherein said image data processor (118) further comprises

a first image data pre-processor (120) configured to identify overexposed regions of said image data and to generate pre-processed image data by excluding said overexposed regions from said image data.

4. The apparatus according to any one of the preceding claims, wherein said image data processor (118) further comprises

a second image data pre-processor (122) configured to identify underexposed regions of said image data and to generate pre-processed image data by excluding said underexposed regions from said image data.

5. The apparatus according to any one of the preceding claims, wherein said image data processor (118) comprises

a high local contrast pixel determinator (124) configured to receive image data, to generate low pass filtered image data based upon said received image data, to determine difference image data by subtracting said generated low pass filtered image data from said received image data and to determine high intensity pixels in said difference image data.

6. The apparatus according to claim 5, wherein said image data processor (118) is configured to generate low pass filtered image data using wavelets.

7. The apparatus according to any one of the preceding claims, wherein said light emitting device (108) is a light emitting diode (LED).

8. A method for determining positions of objects (203) contained within a blood sample (202) using an apparatus, said apparatus comprising an optical system (110, 210), said optical system (110, 210) is configured such that a depth of field of said optical system (110, 210) is larger than or equal to a thickness of said sample (102, 202),

said method comprising

transmitting light from a light emitting device (108) through said optical system (110, 210) and said blood sample (102, 202) onto an image sensor (112, 212),

generating image data based upon said transmitted light using said image sensor (112, 212), and

determining positions for objects (203) in said image data using an image data processor (118),

**characterised in that** the optical system is configured such that

a ratio between a distance between said image sensor (112, 212) and said lens arrangement (114, 214) and an aperture (116, 216) diameter of said optical system (110, 210) is 20-30, and

a magnification of said lens arrangement (114, 214) is approximately 2-4 times and that the wavelength of said light emitting device is between 625 nm and 740 nm.

9. The method according to claim 8, further comprising identifying overexposed regions of said image data using a first image data pre-processor (120,304), and

generating pre-processed image data by excluding said overexposed regions from said image data (306).

10. The method according to any one of claims 8 or 9, further comprising identifying underexposed regions of said image data using a first image data pre-processor (120,308), and

generating pre-processed image data by excluding said underexposed regions from said image data (310).

11. The method according to any one of claims 8 to 10, further comprising generating low pass filtered image data based upon said image data using a high local contrast pixel determinator (124,312),

determining difference image data by subtracting said generated low pass filtered image data from said image data using said high local contrast determinator (124,314), and determining high intensity pixels in said difference image data using said high local contrast determinator (124,316).

**12.** The method according to claim 11, wherein said generating low pass filtered image data (312) is performed by utilizing wavelets.

**13.** Use of an apparatus according to any one of claims 1-7 to count a number of blood cells (203) comprised in a blood sample (102, 202).

**14.** A computer program comprising software instructions arranged to perform the method according to any one of claims 8-12 when downloaded and run in an apparatus.

**15.** A computer program product stored on a computer usable medium, comprising computer readable program means adapted to cause a computer to perform the method of claims 8-12.

**Patentansprüche**

**1.** Gerät zum Bestimmen von Positionen von Objekten, die in einer Probe enthalten sind, wobei das Gerät Folgendes umfasst:

einen Bildsensor (112, 212), der konfiguriert ist, um einfallendes Licht in Bilddaten umzuwandeln,
ein optisches System (110, 210), das eine Linsenanordnung (114, 214) und eine Apertur (116, 216) umfasst, wobei die Apertur (116, 216) zwischen dem Bildsensor (112, 212) und der Linsenanordnung (114, 214) positioniert ist,
eine Licht emittierende Vorrichtung (108), die konfiguriert ist, um Licht in Richtung auf den Bildsensor durch die Probe und das optische System hindurch zu generieren, und
einen Bilddatenprozessor (118), der konfiguriert ist, um Bilddaten von dem Bildsensor (112, 212) zu empfangen und Positionen für Objekte (203) in den Bilddaten zu bestimmen,
wobei die Probe (102, 202) eine Blutprobe ist,
wobei das optische System (110, 210) derart konfiguriert ist, dass eine Schärfentiefe des optischen Systems (110, 210) größer oder gleich einer Dicke der Probe (102, 202) ist,
**dadurch gekennzeichnet,**
**dass** ein Verhältnis zwischen einem Abstand zwischen dem Bildsensor (112, 212) und der Linsenanordnung (114, 214) und einem Durchmesser der Apertur (116, 216) des optischen Systems (110, 210) 20-30 beträgt, und
**dass** eine Vergrößerung der Linsenanordnung (114, 214) ungefähr 2 bis 4 Mal beträgt und dass die Wellenlänge der Licht emittierenden Vorrichtung (108) zwischen 625 nm und 740 nm liegt.

**2.** Gerät nach Anspruch 1, wobei das optische System (110, 210) mit einer Detailauflösung konfiguriert ist, die geringer als eine typische Größe der Objekte (203) in der Probe (102) ist.

**3.** Gerät nach einem der vorhergehenden Ansprüche, wobei der Bilddatenprozessor (118) ferner Folgendes umfasst:

einen ersten Bilddaten-Präprozessor (120), der konfiguriert ist, um überbelichtete Bereiche der Bilddaten zu identifizieren und vorverarbeitete Bilddaten zu generieren, indem er die überbelichteten Bereiche aus den Bilddaten ausschließt.

**4.** Gerät nach einem der vorhergehenden Ansprüche, wobei der Bilddatenprozessor (118) ferner Folgendes umfasst:

einen zweiten Bilddaten-Präprozessor (122), der konfiguriert ist, um unterbelichtete Bereiche der Bilddaten zu identifizieren und vorverarbeitete Bilddaten zu generieren, indem er die unterbelichteten Bereiche aus den Bilddaten ausschließt.

**5.** Gerät nach einem der vorhergehenden Ansprüche, wobei der Bilddatenprozessor (118) Folgendes umfasst:

eine Vorrichtung (124) zum Bestimmen von Pixeln mit hohem lokalem Kontrast, die konfiguriert ist, um Bilddaten zu empfangen, um tiefpassgefilterte Bilddaten auf der Grundlage der empfangenen Bilddaten zu generieren, um Differenzbilddaten zu bestimmen, indem sie die generierten tiefpassgefilterten Bilddaten von den empfangenen Bilddaten abzieht, und um Pixel hoher Intensität in den Differenzbilddaten zu bestimmen.

**6.** Gerät nach Anspruch 5, wobei der Bilddatenprozessor (118) konfiguriert ist, um tiefpassgefilterte Daten unter Verwendung von Wavelets zu generieren.

**7.** Gerät nach einem der vorhergehenden Ansprüche, wobei die Licht emittierende Vorrichtung (108) eine Leuchtdiode (LED) ist.

**8.** Verfahren zum Bestimmen von Positionen von Objekten (203), die in einer Blutprobe (202) enthalten sind, unter Verwendung eines Geräts, wobei das Gerät ein optisches System (110, 210) umfasst, wobei das optische System (110, 210) derart konfiguriert ist, dass eine Schärfentiefe des optischen Systems (110, 210) größer oder gleich einer Dicke der Probe (102, 202) ist,
wobei das Verfahren folgende Schritte umfasst:

Übertragen von Licht von einer Licht emittierenden Vorrichtung (108) durch das optische System (110, 210) und die Blutprobe (102, 202) auf einen Bildsensor (112, 212),
Generieren von Bilddaten basierend auf dem übertragenen Licht unter Verwendung des Bildsensors (112, 212), und
Bestimmen von Positionen für Objekte (203) in den Bilddaten unter Verwendung eines Bilddatenprozessors (118),
**dadurch gekennzeichnet, dass** das optische System derart konfiguriert ist,
dass ein Verhältnis zwischen einem Abstand zwischen dem Bildsensor (112, 212) und der Linsenanordnung (114, 214) und einem Durchmesser der Apertur (116, 216) des optischen Systems (110, 210) 20-30 beträgt, und
dass eine Vergrößerung der Linsenanordnung (114, 214) ungefähr 2 bis 4 Mal beträgt und dass die Wellenlänge der Licht emittierenden Vorrichtung zwischen 625 nm und 740 nm liegt.

9. Verfahren nach Anspruch 8, ferner umfassend folgende Schritte:

Identifizieren überbelichteter Bereiche der Bilddaten unter Verwendung eines ersten Bilddaten-Präprozessors (120, 304), und
Generieren vorverarbeiteter Bilddaten durch Ausschließen der überbelichteten Bereiche aus den Bilddaten (306).

10. Verfahren nach einem der Ansprüche 8 oder 9, ferner umfassend folgende Schritte:

Identifizieren unterbelichteter Bereiche der Bilddaten unter Verwendung eines ersten Bilddaten-Präprozessors (120, 308), und
Generieren vorverarbeiteter Bilddaten durch Ausschließen der unterbelichteten Bereiche aus den Bilddaten (310).

11. Verfahren nach einem der Ansprüche 8 bis 10, ferner umfassend folgende Schritte:

Generieren von tiefpassgefilterten Bilddaten basierend auf den Bilddaten unter Verwendung einer Vorrichtung (124, 312) zum Bestimmen von Pixeln mit hohem lokalen Kontrast,
Bestimmen von Differenzbilddaten durch Abziehen der generierten tiefpassgefilterten Bilddaten von den Bilddaten unter Verwendung der Vorrichtung (124, 314) zum Bestimmen von hohem lokalen Kontrast, und
Bestimmen von Pixeln hoher Intensität in den Differenzbilddaten unter Verwendung der Vorrichtung (124, 314) zum Bestimmen von hohem lokalen Kontrast.

12. Verfahren nach Anspruch 11, wobei das Generieren von tiefpassgefilterten Bilddaten (312) unter Verwendung von Wavelets ausgeführt wird.

13. Verwendung eines Geräts nach einem der Ansprüche 1 bis 7, um eine Anzahl von Blutzellen (203) zu zählen, die in einer Blutprobe (102, 202) enthalten sind.

14. Computerprogramm, das Software-Anweisungen umfasst, die angeordnet sind, um das Verfahren nach einem der Ansprüche 8 bis 12 auszuführen, wenn es auf ein Gerät heruntergeladen und dort ausgeführt wird.

15. Computerprogrammprodukt, das auf einem computerverwendbaren Medium gespeichert ist, das computerlesbare Programmmittel umfasst, die dazu geeignet sind, um einen Computer zu veranlassen, das Verfahren nach Anspruch 8 bis 12 auszuführen.

**Revendications**

1. Appareil pour déterminer les positions d'objets contenus dans un échantillon, ledit appareil comprenant :

un capteur d'images (112, 212) configuré pour transformer une lumière incidente en données d'images,
un système optique (110, 210) comprenant un agencement de lentille (114, 214) et une ouverture (116, 216), ladite ouverture (116, 216) étant positionnée entre ledit capteur d'images (112, 212) et ledit agencement de lentille (114, 214),
un dispositif électroluminescent (108) configuré pour générer une lumière vers ledit capteur d'images à travers ledit échantillon et ledit système optique, et
un processeur de données d'images (118) configuré pour recevoir des données d'images dudit capteur d'images (112, 212) et pour déterminer des positions pour des objets (203) dans lesdites données d'images,
dans lequel ledit échantillon (102, 202) est un échantillon sanguin,
dans lequel ledit système optique (110, 210) est configuré de sorte qu'une profondeur de champ dudit système optique (110, 210) soit supérieure ou égale à une épaisseur dudit échantillon (102, 202),

**caractérisé en ce que**
un rapport entre une distance entre ledit capteur d'images (112, 212) et ledit agencement de lentille (114, 214) et un diamètre d'ouverture (116, 216) dudit système optique (110, 210) est de 20 à 30, et
un agrandissement dudit agencement de lentille (114, 214) est environ de 2 à 4 fois et la longueur d'onde dudit dispositif électroluminescent (108) est entre 625 nm et 740 nm.

2. Appareil selon la revendication 1, dans lequel ledit système optique (110, 210) est configuré avec une résolution de détail inférieure à une taille typique desdits objets (203) dans ledit échantillon (102).

3. Appareil selon l'une quelconque des revendications précédentes, dans lequel ledit processeur d'images (118) comprend en outre :

   un premier préprocesseur de données d'images (120) configuré pour identifier des régions surexposées desdites données d'images et pour générer des données d'images prétraitées en excluant lesdites régions surexposées desdites données d'images.

4. Appareil selon l'une quelconque des revendications précédentes, dans lequel ledit processeur de données d'images (118) comprend en outre un deuxième préprocesseur de données d'images (122) configuré pour identifier des régions sous-exposées desdites données d'images et pour générer des données d'images prétraitées en excluant lesdites régions sous-exposées desdites données d'images.

5. Appareil selon l'une quelconque des revendications précédentes, dans lequel ledit processeur de données d'images (118) comprend
un déterminateur de pixel de fort contraste local (124) configuré pour recevoir des données d'images, générer des données d'images filtrées passe-bas sur la base desdites données d'images reçues, déterminer des données d'images de différence en soustrayant lesdites données d'images filtrées passe-bas générées aux dites données d'images reçues et déterminer des pixels de haute intensité dans lesdites données d'images de différence.

6. Appareil selon la revendication 5, dans lequel ledit processeur de données d'images (118) est configuré pour générer des données d'images filtrées passe-bas en utilisant des ondelettes.

7. Appareil selon l'une quelconque des revendications précédentes, dans lequel ledit dispositif électroluminescent (108) est une diode électroluminescente (LED).

8. Procédé pour déterminer les positions d'objets (203) contenus dans un échantillon sanguin (202) en utilisant un appareil, ledit appareil comprenant un système optique (110, 210), dans lequel ledit système optique (110, 210) est configuré de sorte qu'une profondeur de champ dudit système optique (110, 210) soit supérieure ou égale à une épaisseur dudit échantillon (102, 202),
ledit procédé comprenant
la transmission de lumière d'un dispositif électroluminescent (108) à travers ledit système optique (110, 210) et ledit échantillon sanguin (102, 202) sur un capteur d'images (112, 212),
la génération de données d'images sur la base de ladite lumière transmise en utilisant ledit capteur d'images (112, 212), et
la détermination des positions d'objets (203) dans lesdites données d'images en utilisant un processeur de données d'images (118),
**caractérisé en ce que** le système optique est configuré de sorte que un rapport entre une distance entre ledit capteur d'images (112, 212) et ledit agencement de lentille (114, 214) et un diamètre d'ouverture (116, 216) dudit système optique (110, 210) est de 20 à 30, et
un agrandissement dudit agencement de lentille (114, 214) est environ de 2 à 4 fois et la longueur d'onde dudit dispositif électroluminescent est entre 625 nm et 740 nm.

9. Procédé selon la revendication 8, comprenant en outre
l'identification des régions surexposées desdites données d'images en utilisant un premier préprocesseur de données d'images (120, 304), et
la génération de données d'images prétraitées en excluant lesdites régions surexposées desdites données d'images (306).

10. Procédé selon l'une quelconque des revendications 8 ou 9, comprenant en outre
l'identification de régions sous-exposées desdites données d'images en utilisant un premier préprocesseur de données d'images (120, 308), et
la génération de données d'images prétraitées en excluant lesdites régions sous-exposées desdites données d'images (310).

11. Procédé selon l'une quelconque des revendications 8 à 10, comprenant en outre
la génération de données d'images filtrées passe-bas sur la base desdites données d'images en utilisant un déterminateur de pixel de fort contraste local (124, 312),
la détermination de données d'images de différence en soustrayant lesdites données d'images filtrées passe-bas générées aux dites données d'images en utilisant ledit déterminateur de pixel de fort contraste local (124, 314), et
la détermination de pixels de haute intensité dans lesdites données d'images de différence en utilisant ledit déterminateur de pixel de fort contraste local (124, 316).

12. Procédé selon la revendication 11, dans lequel ladite génération de données d'images filtrées passe-bas (312) est effectuée en utilisant des ondelettes.

13. Utilisation d'un appareil selon l'une quelconque des revendications 1 à 7 pour compter un nombre de globules sanguins (203) compris dans un échantillon sanguin (102, 202).

14. Programme informatique comprenant des instructions logicielles agencées pour effectuer le procédé selon l'une quelconque des revendications 8 à 12 lorsqu'il est téléchargé et exécuté dans un appareil.

15. Produit de programme informatique stocké sur un support utilisable par ordinateur, comprenant un moyen de programme lisible par ordinateur apte à amener un ordinateur à effectuer le procédé selon les revendications 8 à 12.

Fig. 1

Fig. 2

Transmitting light from a light emitting device through an optical system and a sample onto an image sensor  —— 300

Generating image data based upon said transmitted light using said image sensor  —— 302

Determining positions of the objects in the sample  —— 303

Identifying overexposed regions of said image data  —— 304

Generating pre-processed image data by excluding said overexposed regions  —— 306

Identifying underexposed regions of said image data  —— 308

Generating pre-processed image data by excluding said underexposed regions  —— 310

Generating low pass filtered image data based upon said image data  —— 312

Determining difference image data by substracting said image data and said low pass filtered image data  —— 314

Determining high intensity pixels in said difference image data  —— 316

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3824393 A
- US 20040136581 A1

- US 20060050948 A1